# EUROPEAN PATENT SPECIFICATION

(11) **EP 0 505 114 B1**
(45) Date of publication and mention of the grant of the patent: **17.01.1996**
(21) Application number: 92302198.4
(22) Date of filing: 13.03.1992
(51) Int. Cl.: B60Q 1/42

(54) **Electrical switch assembly**
Einrichtung für einen elektrischen Schalter
Montage pour interrupteur électrique

(30) Priority: 19.03.1991 GB 9105837
(43) Date of publication of application: 23.09.1992
(73) Proprietor: LUCAS INDUSTRIES PUBLIC LIMITED COMPANY, Solihull, West Midlands B91 3TX (GB)
(72) Inventor: Cryer, Edward, Burnley, Lancashire (GB)
(74) Representative: Carpenter, David

(56) References cited:
- FR-A- 2 568 421
- US-A- 4 547 636

## Description

This invention relates to a direction indicator switch assembly for a road vehicle of the kind where a further electrical switch, for example a horn operating switch, is carried by and is rotatable with the steering wheel assembly of the vehicle.

A difficulty experienced in the provision of an electrical switch carried by and rotatable with the steering wheel assembly of a road vehicle is the making of satisfactory electrical connections between the switch, which is movable, and other, stationary components of the vehicle. Clearly where the steering wheel can rotate through a plurality of complete revolutions there is the possibility of difficulties arising from twisting of the electrical connecting leads. It has been proposed to minimise such difficulties by effecting electrical connection to the movable switch by way of slip-rings rotatable with the switch and brushes sliding on the slip-rings and carried by a stationary component adjacent the steering wheel assembly. Examples of slip-ring arrangemens are described in US-A-4547636 and DE-A-3028897, the US-A-4547636 arrangement having the brushes movable with respect to stationary slip-rings. Such prior proposals have proved inconvenient in a number of respects, inter alia their bulky nature, and an inherent difficulty in accommodating manufacture and assembly tolerances inherent in the production of the vehicle. It is an object of the present invention to minimise such difficulties.

US-A-4547636 forms the preamble of claim 1.

In accordance with the present invention there is provided a direction indicator switch assembly for a road vehicle comprising a housing arranged to be fixed in use, a manually operable direction indicator switching mechanism carried by the housing, a cancelling cam rotatable relative to the housing, the cam being rotated in use in response to a rotation of the steering wheel/steering shaft assembly of the vehicle and cooperating with the direction indicator switching mechanism to effect cancelling thereof from an operative position to a rest position in response to predetermined rotation of the steering wheel/shaft assembly and, a slip-ring arrangement comprising arcuate slip-ring contacts on a fixed part of said housing and movable brush contacts cooperating with the slip-ring contacts and carried by said cancelling cam for rotation therewith, said brush contacts being arranged for electrical connection to a further electrical switching mechanism carried by and rotatable with the steering wheel/shaft assembly.

Preferably the arcuate slip-ring contacts are formed on a cover plate of the housing, said cover plate at least partially closing a recess in the housing within which the cancelling cam is rotatably received.

Preferably the cancelling cam is driven for rotation relative to the housing by the steering wheel/shaft assembly through the intermediary of a drive collar movable axially but not angularly relative to the cancelling cam.

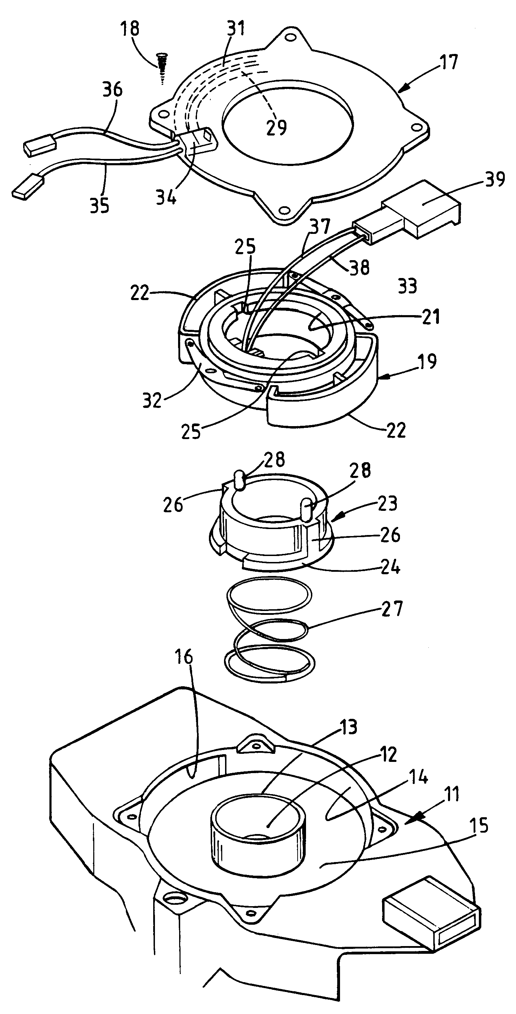

The accompanying drawing is a diagrammatic, exploded perspective representation of part of a direction indicator switch assembly in accordance with one example of the present invention.

Referring to the drawing the direction indicator switch assembly includes a moulded synthetic resin housing 11 which, in use, is secured in position on the outer, stationary part of the steering column assembly of a road vehicle with the steering column, including the rotatable shaft thereof, extending through a central aperture 12 of the housing. The aperture 12 is defined by an axially extending bush 13 which is an integral part of the housing, the bush 13 extending upwardly in the centre of a right cylindrical recess 14 of the housing. The base of the recess 14 is closed by an integral wall 15 of the housing from which the bush 13 is upstanding, and the cylindrical wall of the recess 14 is apertured at 16 so that a cancelling pawl (not shown) of a direction indicator switching mechanism can protrude inwardly of the housing into the recess 14.

The direction indicator switching mechanism of the direction indicator switch assembly forms no part of the present invention and it is sufficient to recognise that a manually operable mechanism is carried by the housing 11 and can be actuated by an outwardly projecting operating lever to set the mechanism in either of first and second operative positions on opposite sides respectively of a central rest position. In both of the operative positions a cancelling pawl of the mechanism projects radially inwardly of the housing through the aperture 16 and into the recess 14 and appropriate deflection of the pawl relative to the housing can cancel the direction indicator switching mechanism from the selected operative position back to the central rest position. In the first and second operative positions respectively of the switching mechanism appropriate electrical contacts are closed, the contacts, in use, being associated with direction indicator lamps on opposite sides of the vehicle respectively. Thus the arrangement may be such that in the first operative position the left hand direction indicator lamps of the vehicle are energised whereas in the second position the right hand direction indicator lamps of the vehicle are energised.

The housing 11 includes an annular cover plate 17 which is secured by screws 18 to the upper face of the housing moulding, partially to close the open, upper end of the recess 14. The plate 17 is formed from synthetic resin material, and so is electrically insulating. Disposed within the recess 14 between the wall 15 and the cover plate 17 is a part cylindrical, moulded synthetic resin, cancelling cam 19. The cancelling cam 19 is annular, having a central aperture 21 of larger diameter than the bush 13, and through which the bush 13 extends. The cam 19 includes two diametrically opposed part cylindrical striker lugs 22 integral with, and protruding radially outwardly from the central boss of the cam. The cylindrical surfaces of the lugs 22 are parts of an imaginary common cylinder, and bear against the cylindrical wall of the recess 14 to guide the cam 19 for rotational movement within the housing 11. Cooperation between the cam 19 and the direction indicator switching mechanism, to effect cancellation of the switching mechanism is achieved by engagement of a radial end face of one or other of the striker lugs 22 with the cancelling pawl of the direction indicator switching mechanism when the pawl is caused to protrude through the aperture 16 and into the recess 14.

In order to drive the cancelling cam 19 for rotation relative to the housing 11 in accordance with rotation of the steering shaft of the vehicle there is provided a moulded synthetic resin drive collar 23. The moulded synthetic resin drive collar 23 is received within the central aperture 21 of the cam 19 and fits around the bush 13 of the housing 11 so as to be supported thereby for rotation about the axis of rotation of the cam 19. The central boss of the cam 19 is formed with an inwardly projection flange at its upper, axial end the flange defining the central aperture 21 of the cam and having therein a pair of diametrically opposed rectangular notches 25. The collar 23 can extend upwardly through the aperture 21 but at its lower end is formed with an outwardly projecting flange 24 of larger diameter than the aperture 21. Moreover, the outer face of the collar 23 is formed with a pair of diametrically opposed axially extending ribs 26 received within the notches 25 of the cam 19 respectively. Thus although the collar 23 cannot rotate relative to the cam 19 it can move axially relative thereto while preserving, by virtue of the elongate nature of the axial ribs 26, a rotational driving connection with the cam 19. Disposed around the bush 13 of the housing, and acting between the flange 24 of the collar 23 and the base wall 15 of the recess 14 is a helical compression spring 27, the compression spring 27 urging the collar 23 upwardly through the cam 19 to a position at which the flange 24 of the collar abuts the undersurface of the inwardly projecting flange of the boss of the cam 19. The upper end of the collar 23 is formed with a pair of diametrically opposed axially expending posts 28 and it will be recognised that under the action of the spring 27 the collar 23 protrudes upwardly through the cam 19 and the cover plate 17 so that the posts 28 can engage in respective recesses in the undersurface of the steering wheel, or steering wheel boss of the road vehicle. The steering wheel is of course keyed to the steering shaft of the vehicle and thus the collar 23 and therefore the cam 19 will rotate with the steering wheel/steering column assembly of the vehicle in use. The facility for axial movement of the collar 23 relative to the housing 11 and the cam 19 permits a good degree of latitude in the positioning of the housing 11 relative to the steering wheel of the vehicle in use while still preserving a driving connection between the steering wheel and the cam 19.

The face of the cover plate 17 presented towards the recess 14 of the housing 11 is formed with a pair of arcuate, concentric electrically conductive tracks 29, 31 the arcuate conductive tracks being centred upon the axis of rotation of the cam 19. The tracks 29, 31 define the circular slip-ring contacts of a slip-ring assembly, the movable brush contacts 32, 33 of which are carried by the cam 19.

The arcuate conductive tracks 29, 31 can be provided on the face of the cover plate 17 by conventional printed circuit techniques and each of the tracks 29, 31 is connected through a connector block 34 fixed to the outer surface of the plate 17, to a respective connecting lead 35, 36. Each of the brush contacts 32, 33 carried by the cam 19 is in the form of a phosphour-bronze leaf-spring contact arrangement. Each leaf-spring contact arrangement comprises a fixing portion whereby the arrangement is anchored to the cam moulding and a pair of integral, oppositely directed leaf-springs each carrying a contact stud at its free end. The leaf-spring arrangements 32, 33 are positioned on the cam 19 diametrically opposite one another each leaf-spring arrangement occupying a circumferential gap between ends of the striker lugs 22 respectively. To accommodate the different diameters of the slip-ring contacts 29, 31 the contact studs of the leaf-spring arrangement 32 are at a radial position relative to the axis of rotation of the cam 19 inwardly of the position of the studs of the leaf-spring contact arrangement 33. Each of the leaf-spring arrangements 32, 33 is electrically contacted to a respective electrical connecting lead 37, 38 the leads 37, 38 being terminated at appropriate terminals within a single terminal block 39. It will be recognised therefore that in use an electrical connection exists between the lead 37 and the lead 35 by way of the brush contact 32 and the arcuate slip-ring contact 29, and similarly an electrical connection exists between the lead 38 and the lead 36 by way of the brush contact 33 and the actuate slip-ring contact 31.

Although not essential it is desirable that each of the brush contacts comprises a pair of electrically interconnected leaf-springs simultaneously engaging the same arcuate conductive track, and furthermore although not essential it is preferable that the slip-ring contacts 29, 31 are circular.

In use the leads 35, 36 can be connected to, for example, the horn circuit of the vehicle, and the leads 37, 38 can be connected through the terminal block 39 to the terminals of a horn switch carried by the steering wheel of the vehicle. Operation of the horn switch will then cause operation of the horn of the vehicle and it will be recognised that during rotation of the steering wheel/column assembly of the vehicle no twisting of the leads 37, 38 nor the leads 36, 35 occurs the rotation electrical connection being provided by the slip-ring assembly 29, 33.

In a modification the tracks 29, 31 are formed as interconnected parts of a fret by stamping from hard brass sheet, each track including an integral terminal to which a respective lead 35, 36 is connected. Thereafter the fret comprising the interconnected tracks and their leads is incorporated into the cover plate 17 during moulding of the plate 17 using known insert moulding techniques. The block 34 housing the points of connection of the leads 35, 36 with their respective track terminals is formed integrally with the plate 17. Before the plate 17, including the tracks 29, 31 exposed at one surface of the plate, can be used the or each interconnection of the tracks is removed to isolate the tracks electrically. Conveniently a punching or stamping operation is used to remove the or each interconnection.

It will be recognised that although it is desirable to drive the cam 19 from the steering wheel by way of the drive collar 23 other drive mechanisms are possible, and there could, for example, be a direct connection between the steering shaft of the vehicle and the cam 19 thus obviating the need for the collar 23.

## Claims

1. A direction indicator switch assembly for a road vehicle comprising a housing (11) arranged to be fixed in use, a slip-ring arrangement comprising arcuate slip-ring contacts (29, 31) on a fixed part (17) of said housing (11) and movable brush contacts (32, 33) cooperating with the slip-ring contacts (29, 31), said brush contacts (32, 33) being arranged for electrical connection to an electrical switching mechanism carried by and rotatable with the steering wheel/shaft assembly of the vehicle, and characterized by comprising a manually operable direction indicator switching mechanism carried by the housing (11), and a cancelling cam (19) rotatable relative to the housing (11), the cam (19) being rotated in use in response to a rotation of the steering wheel/steering shaft assembly and cooperating with the direction indicator switching mechanism to effect canceling thereof from an operative position to a rest position in response to predetermined rotation of the steering wheel/shaft assembly, the movable brush contacts being carried by said cancelling cam (19) for rotation therewith.

2. A switch assembly as claimed in Claim 1 characterized in that said arcuate slip-ring contacts (29, 31) are formed on a cover plate (17) of the housing (11), said cover plate (17) at least partially closing a recess (14) in the housing within which the cancelling cam (19) is rotatably received.

3. A switch assembly as claimed in Claim 1 or Claim 2 characterized in that said cancelling cam (19) is driven for rotation relative to the housing (11) by the steering wheel/shaft assembly through the intermediary of a drive collar (23) movable axially but not angularly relative to the cancelling cam (19).

4. A switch as claimed in Claim 3 characterized in that said collar (23) is resiliently urged (27) axially relative to said cam (19).

## Patentansprüche

1. Schalteraufbau eines Fahrtrichtungsanzeigers für ein Straßenfahrzeug enthaltend ein beim Gebrauch feststehend angeordnetes Gehäuse (11), eine Schleifringanordnung mit gebogenen Schleifringkontakten (29, 31) auf einem feststehenden Teil (17) des Gehäuses (11) und bewegliche mit den Schleifringkontakten (29, 31) zusammenwirkende Bürstenkontakte (32, 33), die zur elektrischen Verbindung an einem elektrischen Schaltmechanismus angeordnet werden, der von dem Lenkrad/Wellen-Aufbau des Fahrzeugs gehalten und mit diesem drehbar ist, **gekennzeichnet durch** Enthalten eines manuell bedienbaren Fahrtrichtungsschaltmechanismus, der durch das Gehäuse (11) gehalten ist, und eines gegenüber dem Gehäuse (11) drehbaren Rückstellnockens (19), der beim Gebrauch in Reaktion auf eine Drehung des Lenkrad/Wellen-Aufbaus gedreht wird und mit dem Fahrtrichtungsschaltmechanismus zusammenwirkt, um dessen Rückstellung von einer Betriebsstellung in eine Ruhestellung in Reaktion auf eine vorbestimmte Drehung des Lenkrad/Wellen-Aufbaus zu bewirken, wobei die beweglichen Bürstenkontakte durch den Rückstellnocken (19) zur Drehung damit gehalten werden.

2. Schalteraufbau wie in Anspruch 1 beansprucht, dadurch gekennzeichnet, daß die gebogenen Schleifringkontakte (29, 31) auf einer Deckplatte (17) des Gehäuses (11) ausgebildet sind, die zumindest teilweise eine Ausnehmung (14) in dem Gehäuse schließt, in welchem der Rückstellnocken (19) drehbar aufgenommen ist.

3. Schalteraufbau wie in Anspruch 1 oder Anspruch 2 beansprucht, dadurch gekennzeichnet, daß der Rückstellnocken (19) zur Drehung gegenüber dem Gehäuse (11) durch den Lenkrad/Wellen-Aufbau über das Zwischenstück eines axial, jedoch nicht winkelförmig gegenüber dem Rückstellnocken bewegbaren Antriebsringes (23) angetrieben ist.

4. Schalteraufbau wie in Anspruch 3 beansprucht, dadurch gekennzeichnet, daß der Antriebsring (23) axial gegen den Nocken (19) elastisch gedrückt (27) ist.

## Revendications

1. Assemblage de commutateur d'indicateur de direction pour un véhicule comprenant un boîtier (11) agencé de sorte à être fixe en service, un agencement à bague glissante comprenant des contacts courbés à bague glissante (29, 31) sur une partie fixe (17) dudit boîtier (11) et des contacts à balai mobiles (32, 33) coopérant avec les contacts à bague glissante (29, 31), lesdits contacts à balai (32, 33) étant destinés à assurer la connexion électrique avec un mécanisme de commutateur électrique supporté par l'assemblage de volant/d'arbre de direction du véhicule et pouvant tourner avec celui-ci, caractérisé en ce qu'il comprend un mécanisme de commutateur d'indicateur de direction à commande manuelle supporté par le boîtier (11) et une came à rappel automatique (19) pouvant tourner par rapport au boîtier (11), la came (19) étant tournée en service en réponse à une rotation de l'assemblage du volant/de l'arbre de direction et coopérant avec le mécanisme de commutateur d'indicateur de direction pour assure le rappel de celui-ci, d'une position de service vers une position de repos, en réponse à une rotation prédéterminée de l'assemblage du volant/de l'arbre de direction, les contacts à balai mobiles étant supportés par ladite came à rappel automatique (19) en vue de leur rotation avec celle-ci.

2. Assemblage de commutateur selon la revendication 1, caractérisé en ce que lesdits contacts courbés à bague glissante (29, 31) sont formés sur une plaque de couverture (17) du boîtier (11), ladite plaque de couverture (17) fermant au moins partiellement un évidement (14) dans le boîtier dans lequel la came à rappel automatique (19) est reçue par rotation.

3. Assemblage de commutateur selon les revendications 1 ou 2, caractérisé en ce que ladite came à rappel automatique (19) est entraînée à tourner par rapport au boîtier (11) par l'assemblage du volant/de l'arbre de direction par l'intermédiaire d'un collet de commande (23) pouvant se déplacer axialement mais non pas angulairement par rapport à la came à rappel automatique (19).

4. Commutateur selon la revendication 3, caractérisé en ce que ledit collet (23) est poussé par un ressort (27) dans une direction axiale par rapport à ladite came (19).
